# EUROPEAN PATENT SPECIFICATION

(11) **EP 3 670 141 B1**
(45) Date of publication and mention of the grant of the patent: **09.11.2022**
(21) Application number: 19217314.4
(22) Date of filing: 18.12.2019
(51) Int. Cl.: B29C 48/00, B29C 48/30, B29C 48/305, B29C 48/21, B29C 48/49, B29C 48/16, B29C 48/07, B29D 30/62, B29D 30/52, B29C 48/25, B29K 9/00, B29K 21/00, B29D 30/60, B29K 105/00, B29L 30/00

(54) **METHODS OF MAKING COMPOSITE INNERLINER AND TIRE HAVING SUCH A COMPOSITE INNERLINER**
VERFAHREN ZUR HERSTELLUNG EINER VERBUNDMATERIALINNENAUSKLEIDUNG UND REIFEN MIT EINER SOLCHEN VERBUNDMATERIALINNENAUSKLEIDUNG
PROCÉDÉS DE FABRICATION DE GARNITURE COMPOSITE ET PNEU COMPRENANT UNE TELLE GARNITURE COMPOSITE

(30) Priority: 19.12.2018 US 201862781763 P
(43) Date of publication of application: 24.06.2020
(73) Proprietor: The Goodyear Tire & Rubber Company, Akron, OH 44316 (US)
(72) Inventor: CHEN, Hongbing, Broadview Heights OH 44147 (US); DYRLUND, Christopher David, Canton OH 44705 (US); ROGENSKI, Elizabeth Amelia, Atwater OH 44201 (US); PHILLIPSON, Joshua Aaron, Brecksville OH 44141 (US); DELANEY, Duane Thomas, Canton OH 44718 (US)
(74) Representative: Kutsch, Bernd

(56) References cited:
- EP-A1- 2 468 533
- WO-A1-2016/167646
- JP-A- H08 132 553
- US-A1- 2009 320 985
- US-A1- 2017 001 360

## Description

### Field of the Invention

The invention relates in general to tire manufacturing, and more particularly to an apparatus for forming tire components and a tire, to methods of making a composite innerliner, and to a tire with a composite innerliner.

### Background of the Invention

Tire manufacturers have progressed to more complicated designs due to an advance in technology as well as a highly competitive industrial environment. In particular, tire designers seek to use multiple rubber compounds in a tire component such as the tread in order to meet customer demands. In order to improve manufacturing efficiency, strip lamination of a continuous strip of rubber is often used to build a tire or tire component.

One tire component of interest is the tire innerliner, which functions to prevent air loss from the tire. Rubbers such as butyl or halobutyl rubber are often used as a major portion of the innerliners. One problem that occurs when strip laminating the tire innerliner is low adhesion of the strip to the adjacent ply layer. Poor adhesion between the inner liner and ply can result in tire defects, resulting in the need to scrap the tire. Increasing the stitcher pressure to ensure adhesion does not solve the problem. Also, using a lower butyl rubber formulation to enhance adhesion typically results in a heavier liner, increasing the weight of the tire.

Thus, an improved innerliner design and method of making is desired which overcomes the aforementioned disadvantages.

EP 2 486 533 A1 and US 2009/0320985 A1 describe a method in accordance with the preamble of claim 1.

WO 2016/167646 A1 discloses an apparatus and a method for extruding cord reinforced extrudes.

US 2017/0001360 describes an apparatus for applying a mixture of a first compound and a second compound using two different extruders with gear pumps followed by a nozzle with two channels.

JP H08 132553 A discloses a laminate suitable for a tire having an air permeable layer.

### Summary of the Invention

The invention relates to a method in accordance with claim 1 or with claim 11.

Dependent claims refer to preferred embodiments of the invention.

In one aspect of the invention, a method for forming a tire having an innerliner is disclosed, the method comprising the steps: forming a coextruded strip of a first compound and a second compound, wherein the first compound A is an air impermeable compound; and winding the coextruded strip onto a tire building drum while varying the ratio of the first compound to the second compound to form the innerliner as an inner liner layer of spirally wound coextruded strips.

In another aspect of the invention, method for forming a tire having an innerliner is disclosed, the method comprising the steps: forming a coextruded strip of a first compound and a second compound, wherein the first compound A is an air impermeable compound; and applying the coextruded strip as an innerliner of a tire, the innerliner being formed as an inner liner layer of spirally wound coextruded strips; wherein the coextruded strip is formed by extruding the first compound through a first extruder and a first gear pump and into a first passageway of a coextrusion nozzle, extruding the second compound through a second extruder and a second gear pump and into a second passageway of the coextrusion nozzle; and wherein the first and second passageways are joined together immediately upstream of the die outlet of the coextrusion nozzle.

In yet another aspect of the invention, tire having an innerliner is disclosed wherein the innerliner is provided as an innerliner layer of spirally applied coextruded strips of a first compound and a second compound, wherein the first compound is an air impermeable compound, and wherein the ratio of the first compound to the second compound varies in the innerliner across the axial direction of the tire when moving from one tire shoulder to the other tire shoulder.

In a one aspect of the invention, the first compound may be only partially encapsulated.

In another aspect of the invention, the first compound may be fully encapsulated.

In another aspect of the invention, the ratio of the first gear pump to the second gear pump may be varied during operation of the system.

### Definitions

"Axial" and "axially" means the lines or directions that are parallel to the axis of rotation of the tire.

"Circumferential" means lines or directions extending along the perimeter of the surface of the annular tread perpendicular to the axial direction.

"Inner Liner" means the layer or layers of elastomer or other material that form the inside surface of a tubeless tire and that contain the inflating fluid within the tire.

"Radial" and "radially" mean directions radially toward or away from the axis of rotation of the tire.

"Laminate structure" means an unvulcanized structure made of one or more layers of tire or elastomer components such as the innerliner, sidewalls, and optional ply layer.

### Brief Description of the Drawings

The invention will be described by way of example and with reference to the accompanying drawings in which:
FIG. 1 is a cross-sectional view of a tire of the present invention;
FIG. 2 is a cross-sectional view of a complex innerliner of the present invention;
FIG. 3 is a front perspective view of a dual compound strip;
FIG. 4 is a cross-sectional view of a dual compound strip;
FIG. 5 is a front view of a dual innerliner configuration that was strip-laminated directly onto a tire building machine;
FIG. 6 is a cross-sectional view of a dual compound extruder apparatus;
FIG. 7 is a perspective cutaway view of a coextrusion nozzle of the present invention; and
FIG. 8 is a side cross-sectional view of the coextrusion nozzle of FIG. 4.

### Detailed Description of Example Embodiments of the Invention

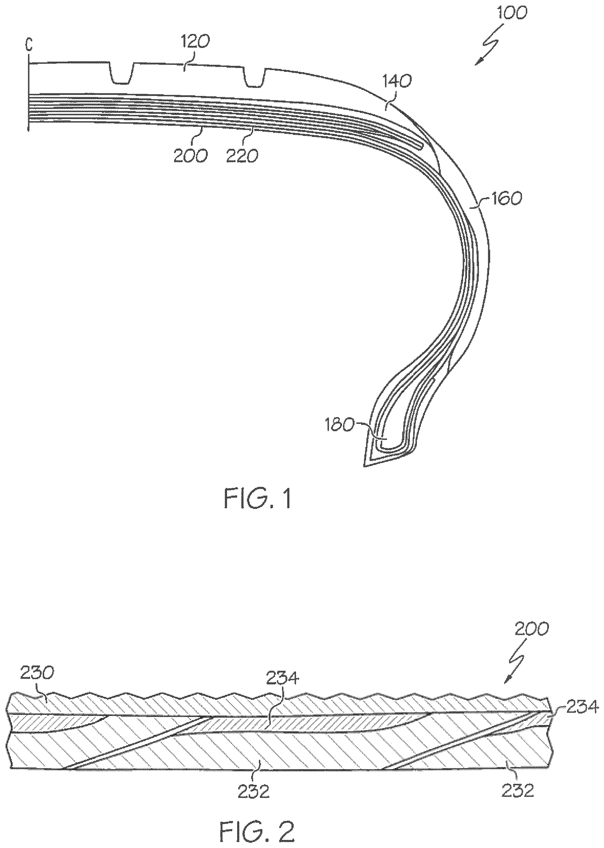

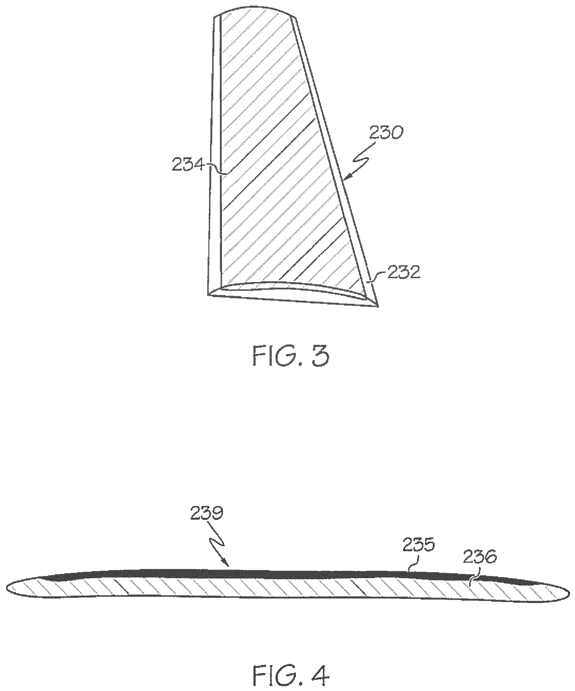

FIG. 1 illustrates a pneumatic radial tire 100 of the present invention. The tire as shown is a passenger tire, but the invention as described herein is not limited to a passenger tire and may be used for other types of tires such as truck or OTR tires. The tire is preferably a conventional tire and has a ground-engaging tread 120, sidewalls 160 that extend radially inwards from the shoulders 140 and terminate in a pair of bead portions 180. The tire 100 preferably has a carcass reinforcing structure 220 that is anchored in a respective bead portion 180. The carcass reinforcing structure 220 comprises at least one reinforcing ply. An inner liner 200 of the present invention is located radially inward of the ply layer. The inner liner is formed from a continuous dual compound coextruded strip 230, as shown in FIG. 3.

The coextruded strip 230 is formed of a first discrete layer 232 of a first compound joined to a discrete second layer 234 of a second compound. The first and second compounds are not mixed together to form the coextruded strip 230 and are only joined together at an interface.

The first compound 232 is preferably formed of an impermeable material such as butyl, bromobutyl, and halobutyl rubber as well as any material with the air permeability characteristics of butyl, bromobutyl, or halobutyl rubber.

The first layer thickness of the impermeable material is preferably in the range of from 0.3mm to 2 mm, and more preferably in the range of from 0.6 to 1.2 mm.

The second compound is preferably a ply coat or ply compound, and preferably has a thickness in the range of from 0.01mm to .2 mm, more preferably 0.01mm to 0.1 mm.

The overall width of the strip 230 is preferably in the range of from 10 mm to 50 mm, more preferably 20 to 40mm.

The term "about" as used herein means a variation of +/- 10%.

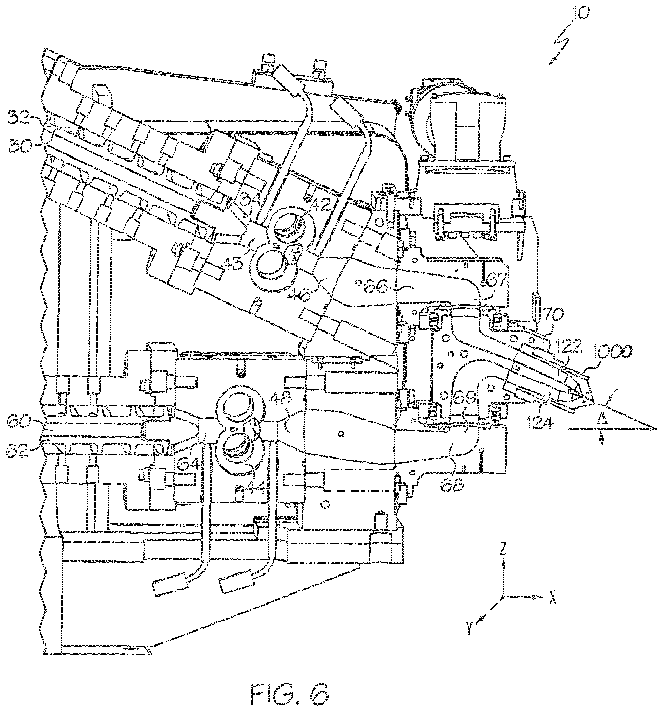

The ratio of the first compound to the second compound of the strip may be varied almost instantaneously by the dual extruder apparatus 10 shown in FIG. 6. In one example, FIG. 3 illustrates a dual compound strip 230 formed of a first compound 232 (for purposes of illustration) and second compound 234. The dual compound strip is preferably made of 90% of the first compound, and 10% of the second compound. FIG. 4 is a cross-sectional view of a second embodiment of a dual compound strip 239, comprising of a 90% butyl rubber layer 236 and 10% ply coat strip 235.

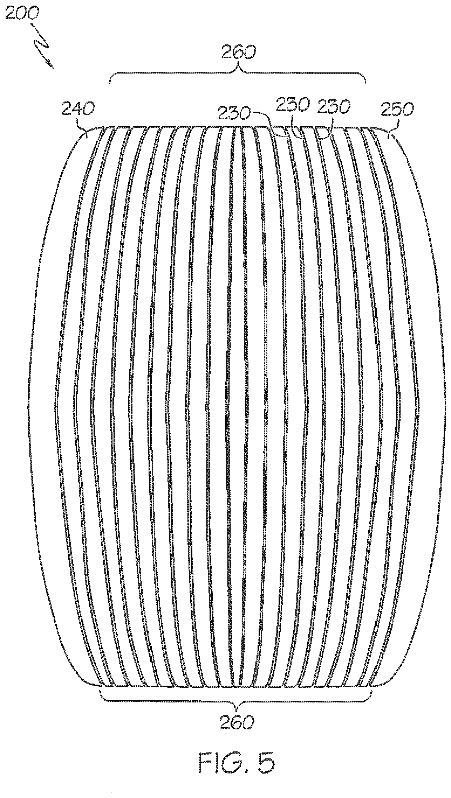

FIG. 5 illustrates an inner liner configuration 200 of the present invention that is formed by spirally winding a coextruded dual compound strip 230. The inner liner configuration 200 has outer lateral ends 240, 250 and a middle portion 260. At the middle portion of the inner liner configuration, the dual compound strip 230 has a ratio in the range of 80-100 % impermeable material to 20 % or less ply coat. The outer lateral ends 240, 250 have a different ratio, wherein the strip is preferably formed of 90-100% ply compound.

### Dual Compound Extruder Apparatus

FIG. 5 illustrates a first embodiment of a dual compound extruder apparatus 10 suitable for use for making the coextruded strip 230. The dual compound extruder apparatus 10 extrudes a continuous coextruded strip of two compounds directly onto a tire building drum, or tire carcass or component building apparatus.

As shown in FIG. 6, the dual compound extruder apparatus 10 includes a first extruder 30 and a second extruder 60, preferably arranged in close proximity in a stacked relationship as shown. The first extruder 30 has an inlet 32 for receiving a first rubber composition A as described in more detail, below. The second extruder 60 has an inlet 62 for receiving a second rubber composition B as described in more detail, below. The first or second extruder 30, 60 may comprise any commercial extruder suitable for processing of rubber or elastomer compounds. The extruder may comprise a commercially available extruder commonly known by those skilled in the art as a pin type extruder, a twin screw or a single screw extruder, or a ring type of extruder. Preferably, the extruder has a length to diameter ratio (L/D) of 5 but may range from 3 to 10.

The first extruder inlet 32 receives a first compound A, examples of which are described in more detail, below. The first extruder 30 functions to warm up a first compound A to the temperature in the range of 80°C to 150°C, preferably 90°C to 120°C, and to masticate the rubber composition as needed. The output end 34 of the first extruder 30 is connected to an inlet end 43 of a first gear pump 42. Compound A is thus first extruded by the first extruder 30 and then pumped by the first gear pump 42 into a rotatable housing for facilitating flow into a coextrusion nozzle 1000. The first gear pump 42 functions as a metering device and a pump and may have gears such as planetary gears, bevel gears or other gears.

The second extruder inlet 62 receives a second compound B, examples of which are described in more detail, below. The second extruder 60 functions to warm up the second compound B to the temperature in the range of 80°C to 150°C, preferably 90°C to 120°C, and to masticate the rubber composition as needed. The output end 64 of the second extruder 60 is connected to an inlet end 45 of a second gear pump 44. Compound B is thus extruded by the second extruder 60 and then pumped by the second gear pump 44, which functions as a metering device and a pump and may have gears such as planetary gears, bevel gears or other gears.

The first and second gear pumps 42,44 are preferably placed in close proximity to each other so that the outlet channels 46, 48 of the first and second gear pumps are also in close proximity, as shown in FIG. 2. The outlet channels 46, 48 are fed into a first and second transition channel 66, 68 which have a horizontal portion followed by a vertical portion 67, 69 prior to entering a rotatable applicator head 70.

### Rotatable Applicator Head

The rotatable applicator head 70 is rotatable about the Z axis, allowing the nozzle 1000 to pivot or rotate. The compound A and compound B flow streams 67, 69 enter the rotatable applicator head 70 in a direction parallel with the Z axis. The A and B flow streams 67, 69 are decreased in area and angled downwardly prior to entering coextrusion nozzle 1000.

The rotatable applicator head can rotate in the range of +/-360 degrees, or more typically +/-150 degrees from the center position. Because the rubber material changes direction prior to entering the rotatable applicator head, the flow remains unaffected by the rotation of the applicator head. Since rubber or elastomers have memory, changing direction of the rubber material prior to rotation prevents the material from curling or otherwise having an undesirable non-uniform flow.

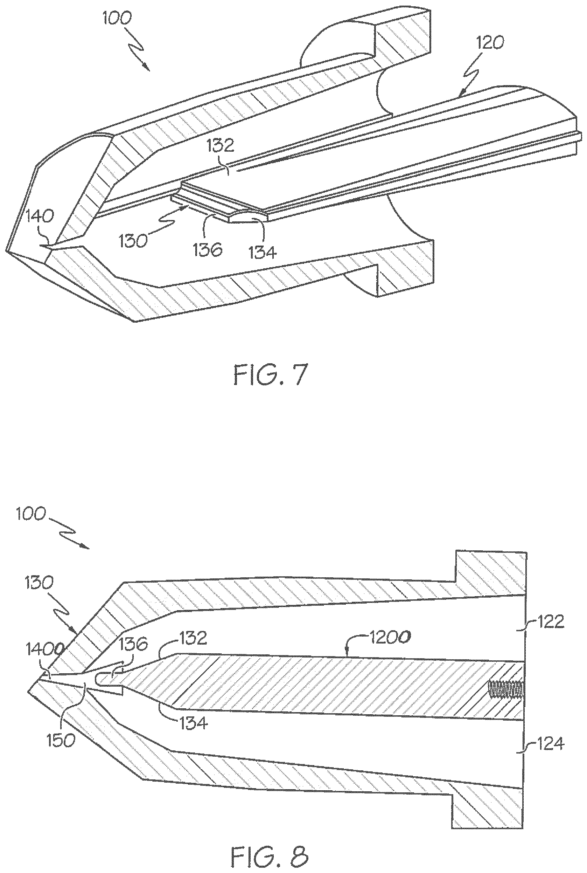

FIGS. 7-8 illustrate a coextrusion nozzle 1000 suitable for use with the dual compound extruder apparatus 10 of the present invention. The coextrusion nozzle 1000 is useful for forming a coextruded or dual compound continuous strip as shown in FIG. 6. The coextrusion nozzle 1000 has a removable insert 1200 that functions to divide the nozzle into a first and second flow passageway 122, 124. The removable insert 1200 is preferably rectangular in cross-sectional shape. The removable insert 1200 has a distal end 130 with tapered ends 132, 134 forming a nose 136. The nose 136 is positioned adjacent the nozzle die exit 1400 and spaced a few millimeters from the die exit 1400. The region between the nose 136 and the die exit 1400 is a low volume coextrusion zone 150 that is high pressure. In the low volume coextrusion zone 150, compound A flowstream 122 merges (but does not mix with) compound B flowstream 124.

The dual compound extruder apparatus 10 with the coextrusion nozzle 1000 produces a coextruded strip 230 having a first layer 232 of an impermeable compound such as butyl rubber or halobutyl rubber and a second layer 234 of a second compound B. The first layer 112 and the second layer 114 are not mixed together and are joined together at an interface in a coextrusion zone of the nozzle. The coextrusion zone is located upstream of the nozzle die, where the compound A flow stream joins with the compound B flow stream under high pressure.

The dual compound extruder apparatus 10 can be used to vary the volume ratio of the first or impermeable compound to the second or ply compound of the coextruded strip, by varying the ratio of the speed of the first gear pump to the speed of the second gear pump. The dual compound extruder apparatus 10 can adjust the speed ratios on the fly, and due to the small residence time of the coextrusion nozzle, the apparatus has a fast response to a change in the compound ratios. This is due to the low volume of the coextrusion zone. The dual compound extruder apparatus 10 with the coextrusion nozzle may be used to coextrude a dual compound strip in a continuous manner onto a tire building drum, as shown in FIG. 5.

The width of the rubber strip output from the nozzle orifice is typically 15 mm in width, but may vary in the range of 5 mm to 30 mm. The nozzle may be optionally heated to a temperature in the range of 0 to 110 degrees Celsius, preferably in the range of 0 to 93.3 degrees Celsius, using external or internal heaters (not shown).

As shown in FIG. 6, the nozzle 1000 is oriented with respect to the tire building drum A, core (not shown) or other application surface typically at an angle β in the range of 0 to 90 degrees, more typically in the range of 35-90 degrees. It is preferred that the rubber output from the nozzle be oriented 90 degrees relative to the application surface, although α may range from 35-90 degrees.

The nozzle is oriented at an angle with respect to a tire building surface or core. The nozzle assembly is capable of translating in three directions in discrete index positions in order to accurately apply the rubber to the building surface. The support surface can be a toroid shaped core or a cylindrical shaped tire building drum, or any other desired shape. The primary advantage of applying the strip to a toroidally shaped surface is the finished part is accurately positioned in a green uncured state at the proper orientation to be molded without requiring any change in orientation from the condition in which the strip was initially formed.

The extrudate exits the nozzle in a strip form, having the desired shape of the exit orifice of the nozzle. If a drum or toroid is used as an applicator surface, as the drum or core rotates, a continuous annular strip may be formed. The nozzle can be indexed axially so to form the desired shape of the component. The nozzle can be controlled by a control system wherein the movement of the nozzle so that the multiple layers of strip dictates the shape of the desired tire component.

## Claims

1. A method for forming a tire (100) having an innerliner (200), the method comprising the steps:
forming a coextruded strip (230, 239) of a first compound (A) and a second compound (B), wherein the first compound (A) is an air impermeable compound; and
winding the coextruded strip (230, 239) onto a tire building drum while varying the ratio of the first compound (A) to the second compound (B) to form the innerliner (200) as an inner liner layer of spirally wound coextruded strips (230, 239);
wherein the coextruded strip (230, 239) is formed by extruding a first compound (A) through a first extruder (30) and a first gear pump (42) and into a first passageway (122) of a coextrusion nozzle (1000), extruding a second compound (B) through a second extruder (60) and a second gear pump (44) and into a second passageway (124) of the coextrusion nozzle (1000),
**characterized in that** the first and second passageways (122, 124) are joined together immediately upstream of a die outlet (1400) of the coextrusion nozzle (1000) and **in that** the coextrusion nozzle (1000) has a removable insert (1200) which divides the nozzle (1000) into the separate first and second passageway (122, 124).

2. The method of claim 1 wherein the second compound (B) is a cross linkable diene rubber compound or mixtures thereof and/or wherein the first compound (A) is butyl rubber or mixtures thereof.

3. The method of at least one of the previous claims wherein the coextruded strip (230, 239) forming an axial middle portion (260) of the innerliner (200) has a volume ratio of 90% of the first compound (A) to 10% of the second compound (B) or has a volume ratio in a range of from 80% to 95% of the first compound (A) to 20% to 5% of the second compound (B).

4. The method of at least one of the previous claims wherein the coextruded strip (230, 239) forming axial lateral end portions (240, 250) of the innerliner (200) has less than 10% of the first compound (A) or 0% of the first compound (A) and/or wherein the coextruded strip (230, 239) forming the axial lateral end portions (240, 250) of the innerliner (200) has greater than 90% of the second compound (B) or 100% of the second compound (B).

5. The method of claim 1 wherein the coextrusion nozzle (1000) is one piece and/or mounted on a rotatable head (70).

6. The method of claim 1 or 5 wherein the insert (1200) has a distal end (130) for positioning adjacent the die outlet (1400) of the coextrusion nozzle (1000), the distal end (130) having an elongated flat portion and/or a tapered end (132, 134).

7. The method of at least one of the previous claims wherein the ratio of the volume of the first compound (A) to the volume of the second compound (B) is varied by changing the ratio of the speed of the first gear pump (42) to the second gear pump (44).

8. The method of at least one of the previous claims wherein the coextruded strip (230, 239) has a rectangular or trapezoidal cross-sectional shape.

9. The method of at least one of the previous claims wherein the coextruded strip (230, 239) is formed and/or applied in a continuous manner.

10. The method of at least one of the previous claims wherein the first compound (A) is located radially inward of the second compound (B).

11. A method for forming a tire (100) having an innerliner (200), the method comprising the steps:
forming a coextruded strip (230, 239) of a first compound (A) and a second compound (B), wherein the first compound (A) is an air impermeable compound; and
applying the coextruded strip (230, 239) as an innerliner (200) of a tire (100), the innerliner (200) being formed as an inner liner layer of spirally wound coextruded strips (230, 239);
wherein the coextruded strip (230, 239) is formed by extruding the first compound (A) through a first extruder (30) and a first gear pump (42) and into a first passageway (122) of a coextrusion nozzle (1000), extruding the second compound (B) through a second extruder (60) and a second gear pump (44) and into a second passageway (124) of the coextrusion nozzle (1000);
**characterized in that** the first and second passageways (122, 124) are joined together immediately upstream of a die outlet (1400) of the coextrusion nozzle (1000) and **in that** the coextrusion nozzle (1000) has a removable insert (1200) which divides the nozzle (1000) into the separate first and second passageway (122, 124).

## Patentansprüche

1. Verfahren zum Ausbilden eines Reifens (100), der eine Innenisolierung (200) aufweist, das Verfahren umfassend die Schritte:
Ausbilden eines koextrudierten Streifens (230, 239) aus einer ersten Verbindung (A) und einer zweiten Verbindung (B), wobei die erste Verbindung (A) eine luftundurchlässige Verbindung ist; und
Aufwickeln des koextrudierten Streifens (230, 239) auf eine Reifenaufbautrommel, während das Verhältnis der ersten Verbindung (A) zu der zweiten Verbindung (B) variiert wird, um die Innenisolierung (200) als eine Innenisolierschicht aus spiralförmig gewickelten koextrudierten Streifen (230, 239) auszubilden;
wobei der koextrudierte Streifen (230, 239) durch ein Extrudieren einer ersten Verbindung (A) durch einen ersten Extruder (30) und eine erste Zahnradpumpe (42) und in einen ersten Durchgang (122) einer Koextrusionsdüse (1000), Extrudieren einer zweiten Verbindung (B) durch einen zweiten Extruder (60) und eine zweite Zahnradpumpe (44) und in einen zweiten Durchgang (124) der Koextrusionsdüse (1000), ausgebildet wird,
**dadurch gekennzeichnet, dass** der erste und der zweite Durchgang (122, 124) unmittelbar stromaufwärts eines Düsenkopfauslasses (1400) der Koextrusionsdüse (1000) miteinander verbunden sind und dass die Koextrusionsdüse (1000) einen entfernbaren Einsatz (1200) aufweist, der die Düse (1000) in den getrennten ersten und zweiten Durchgang (122, 124) trennt.

2. Verfahren nach Anspruch 1, wobei die zweite Verbindung (B) eine vernetzbare Dienkautschukverbindung oder Mischungen davon ist und/oder wobei die erste Verbindung (A) Butylkautschuk oder Mischungen davon ist.

3. Verfahren nach mindestens einem der vorstehenden Ansprüche, wobei der koextrudierte Streifen (230, 239), der einen axialen Mittelabschnitt (260) der Innenisolierung (200) ausbildet, ein Volumenverhältnis von 90 % der ersten Verbindung (A) zu 10 % der zweiten Verbindung (B) aufweist oder ein Volumenverhältnis in dem Bereich von 80 % bis 95 % der ersten Verbindung (A) zu 20 % bis 5 % der zweiten Verbindung (B) aufweist.

4. Verfahren nach mindestens einem der vorstehenden Ansprüche, wobei der koextrudierte Streifen (230, 239), der axiale seitliche Endabschnitte (240, 250) der Innenisolierung (200) ausbildet, weniger als 10 % der ersten Verbindung (A) oder 0 % der ersten Verbindung (A) aufweist und/oder wobei der koextrudierte Streifen (230, 239), der die axialen seitlichen Endabschnitte (240, 250) der Innenisolierung (200) ausbildet, mehr als 90 % der zweiten Verbindung (B) oder 100 % der zweiten Verbindung (B) aufweist.

5. Verfahren nach Anspruch 1, wobei die Koextrusionsdüse (1000) einstückig und/oder auf einem drehbaren Kopf (70) montiert ist.

6. Verfahren nach Anspruch 1 oder 5, wobei der Einsatz (1200) ein distales Ende (130) zum Positionieren angrenzend an den Düsenkopfauslass (1400) der Koextrusionsdüse (1000) aufweist, wobei das distale Ende (130) einen länglichen flachen Abschnitt und/oder ein verjüngtes Ende (132, 134) aufweist.

7. Verfahren nach mindestens einem der vorstehenden Ansprüche, wobei das Verhältnis des Volumens der ersten Verbindung (A) zu dem Volumen der zweiten Verbindung (B) durch ein Ändern des Geschwindigkeitsverhältnisses der ersten Zahnradpumpe (42) zu der zweiten Zahnradpumpe (44) variiert wird.

8. Verfahren nach mindestens einem der vorstehenden Ansprüche, wobei der koextrudierte Streifen (230, 239) eine rechteckige oder trapezförmige Querschnittsform aufweist.

9. Verfahren nach mindestens einem der vorstehenden Ansprüche, wobei der koextrudierte Streifen (230, 239) in einer fortlaufenden Weise ausgebildet und/oder aufgetragen wird.

10. Verfahren nach mindestens einem der vorstehenden Ansprüche, wobei sich die erste Verbindung (A) radial innerhalb der zweiten Verbindung (B) befindet.

11. Verfahren zum Ausbilden eines Reifens (100), der eine Innenisolierung (200) aufweist, das Verfahren umfassend die Schritte:
Ausbilden eines koextrudierten Streifens (230, 239) aus einer ersten Verbindung (A) und einer zweiten Verbindung (B), wobei die erste Verbindung (A) eine luftundurchlässige Verbindung ist; und
Auftragen des koextrudierten Streifens (230, 239) als eine Innenisolierung (200) eines Reifens (100), wobei die Innenisolierung (200) als eine Innenisolierschicht aus spiralförmig gewickelten koextrudierten Streifen (230, 239) ausgebildet ist;
wobei der koextrudierte Streifen (230, 239) durch Extrudieren der ersten Verbindung (A) durch einen ersten Extruder (30) und eine erste Zahnradpumpe (42) und in einen ersten Durchgang (122) einer Koextrusionsdüse (1000), Extrudieren der zweiten Verbindung (B) durch einen zweiten Extruder (60) und eine zweite Zahnradpumpe (44) und in einen zweiten Durchgang (124) der Koextrusionsdüse (1000), ausgebildet wird;
**dadurch gekennzeichnet, dass** der erste und der zweite Durchgang (122, 124) unmittelbar stromaufwärts eines Düsenkopfauslasses (1400) der Koextrusionsdüse (1000) miteinander verbunden sind und dass die Koextrusionsdüse (1000) einen entfernbaren Einsatz (1200) aufweist, der die Düse (1000) in den getrennten ersten und zweiten Durchgang (122, 124) trennt.

## Revendications

1. Procédé destiné à la confection d'un bandage pneumatique (100) qui possède un calandrage intérieur (200) le procédé comprenant les étapes dans lesquelles :
on forme une bande coextrudée (230, 239) qui est constituée par un premier composé (A) et par un second composé (B) ; dans lequel le premier composé (A) représente un composé qui est imperméable à l'air; et
on enroule la bande coextrudée (230, 239) sur un tambour de confection de bandage pneumatique tout en faisant varier le rapport entre le premier composé (A) et le second composé (B) dans le but d'obtenir le calandrage intérieur (200) sous la forme d'une couche de calandrage intérieur constituée par des bandes coextrudées (230, 239) qui ont été enroulées en spirale ;
dans lequel on obtient la bande coextrudée (230, 239) par l'intermédiaire : de l'extrusion d'un premier composé (A) en passant par une première extrudeuse (30) et par une première pompe à engrenages (42) et jusque dans un premier passage (122) d'une buse de coextrusion (1000) ; de l'extrusion d'un d'un second composé (B) en passant par une seconde extrudeuse (60) et par une seconde pompe à engrenages (44) et jusque dans un second passage (124) de la buse de coextrusion (1000) ;
**caractérisé en ce que** l'on joint l'un à l'autre le premier et le second passage (122, 124) directement en amont une sortie de filière (1400) de la buse de coextrusion (1000) ; et **en ce que** la buse de coextrusion (1000) possède un insert amovible (1200) qui divise la buse (1000) afin d'obtenir une séparation entre le premier et le second passage (122, 124).

2. Procédé selon la revendication 1, dans lequel le second composé (B) représente un composé à base de caoutchouc diénique réticulable ou des mélanges de ce dernier et/ou dans lequel le premier composé (A) représente un caoutchouc de type butyle ou des mélanges de ce dernier.

3. Procédé selon au moins une des revendications précédentes, dans lequel la bande coextrudée (230, 239), qui forme une portion médiane axiale (260) du calandrage intérieur (200), possède un rapport en volume qui représente de 90 % du premier composé (A) à 10 % du second composé (B) ou un rapport en volume qui se situe dans une plage allant d'une valeur de 80 % à 95 % du premier composé (A) à une valeur de 20 % à 5 % du second composé (B).

4. Procédé selon au moins une des revendications précédentes, dans lequel la bande coextrudée (230, 239), qui forme des portions terminales latérales axiales (240, 250) du calandrage intérieur (200), possède moins de 10 % du premier composé (A) ou 0 % du premier composé (A) et/ou dans lequel la bande coextrudée (230, 239), qui forme les portions terminales latérales axiales (240, 250) du calandrage intérieur (200), possède plus de 90 % du second composé (B) ou 100 % du second composé (B).

5. Procédé selon la revendication 1, dans lequel la buse de coextrusion (1000) représente une seule pièce et/ou est montée sur une tête rotative (70).

6. Procédé selon la revendication 1 ou 5, dans lequel l'insert (1200) possède une extrémité distale (130) qui est destinée à venir se disposer en position adjacente à la sortie de filière (1400) de la buse de coextrusion (1000), l'extrémité distale (130) possédant une portion plate allongée et/ou une extrémité (132, 134) de forme conique.

7. Procédé selon au moins une des revendications précédentes, dans lequel on fait varier le rapport entre le volume du premier composé (A) et le volume du second composé (B) par l'intermédiaire d'une modification du rapport entre la vitesse de la première pompe à engrenages (42) et celle de la seconde pompe à engrenages (44).

8. Procédé selon au moins une des revendications précédentes, dans lequel la bande coextrudée (230, 239) possède une configuration de forme rectangulaire ou de forme trapézoïdale en section transversale.

9. Procédé selon au moins une des revendications précédentes, dans lequel la bande coextrudée (230, 239) est réalisée et/ou est appliquée selon un mode en continu.

10. Procédé selon au moins une des revendications précédentes, dans lequel le premier composé (A) est dsiposé à l'intérieur, en direction radiale, du second composé (B).

11. Procédé destiné destiné à la confection d'un bandage pneumatique (100) qui possède un calandrage intérieur (200), le procédé comprenant les étapes dans lesquelles :
on forme une bande coextrudée (230, 239) qui est constituée par un premier composé (A) et par un second composé (B) ; dans lequel le premier composé (A) représente un composé qui est imperméable à l'air; et
on applique la bande coextrudée (230, 239) sous la forme d'un calandrage intérieur (200) d'un bandage pneumatique (100), le calandrage intérieur (200) étant réalisé sous la forme d'une couche de calandrage intérieur constituée par des bandes coextrudées (230, 239) qui ont été enroulées en spirale ;
dans lequel on obtient la bande coextrudée (230, 239) par l'intermédiaire : de l'extrusion du premier composé (A) en passant par une première extrudeuse (30) et par une première pompe à engrenages (42) et jusque dans un premier passage (122) d'une buse de coextrusion (1000) ; de l'extrusion du second composé (B) en passant par une seconde extrudeuse (60) et par une seconde pompe à engrenages (44) et jusque dans un second passage (124) d'une buse de coextrusion (1000) ;
**caractérisé en ce que** l'on joint l'un à l'autre le premier et le second passage (122, 124) directement en amont une sortie de filière (1400) de la buse de coextrusion (1000) ; et **en ce que** la buse de coextrusion (1000) possède un insert amovible (1200) qui divise la buse (1000) afin d'obtenir une séparation entre le premier et le second passage (122, 124).
